# EUROPÄISCHE PATENTSCHRIFT

(11) **EP 1 867 848 B1**
(45) Veröffentlichungstag und Bekanntmachung des Hinweises auf die Patenterteilung: **26.08.2009**
(21) Anmeldenummer: 07108703.5
(22) Anmeldetag: 23.05.2007
(51) Int. Cl.: F01N 3/32, F01N 5/04, F02B 37/16

(54) **Brennkraftmaschine mit Sekundärlufteinblassystem**
Combustion machine with secondary air injection system
Moteur à combustion interne doté d'un système de mise à feu à air secondaire

(30) Priorität: 12.06.2006 DE 102006027449
(43) Veröffentlichungstag der Anmeldung: 19.12.2007
(73) Patentinhaber: MANN+HUMMEL GmbH, 71638 Ludwigsburg (DE)
(72) Erfinder: Schick, Hedwig, 71732 Tamm (DE); Fischer, Helmuth, 97941 Tauberbischofsheim (DE); Baumann, John, Grosse Pointe Farms, MI 48236 (US)

(56) Entgegenhaltungen:
- EP-A- 1 524 417
- EP-A- 1 722 080
- WO-A-95/08704
- WO-A-97/38212
- WO-A-20/06024950
- DE-A1- 4 106 046
- DE-A1- 10 036 269
- US-B1- 6 276 139

## Beschreibung

### Technisches Gebiet

Die Erfindung betrifft ein Verfahren zum Betrieb einer Brennkraftmaschine, welche ein Leitungssystem für Sekundärluft zur Einleitung in den Auspufftrakt aufweist nach der Gattung des Patentanspruchs 1. Außerdem betrifft die Erfindung eine Brennkraftmaschine mit einem Leitungssystem für Sekundärluft zur Einleitung in den Auspufftrakt nach der Gattung des Anspruches 10.

### Stand der Technik

Sekundärlufteinblassysteme werden zur Reduzierung von HC und CO während des Kaltstarts von Brennkraftmaschinen eingesetzt. Mit diesem System wird Frischluft auf die Abgasseite geblasen und damit eine Nachoxidation von HC und CO erzielt. Gleichzeitig erhöht sich die Abgastemperatur, der Katalysator erreicht früher seine wirksame Betriebstemperatur.

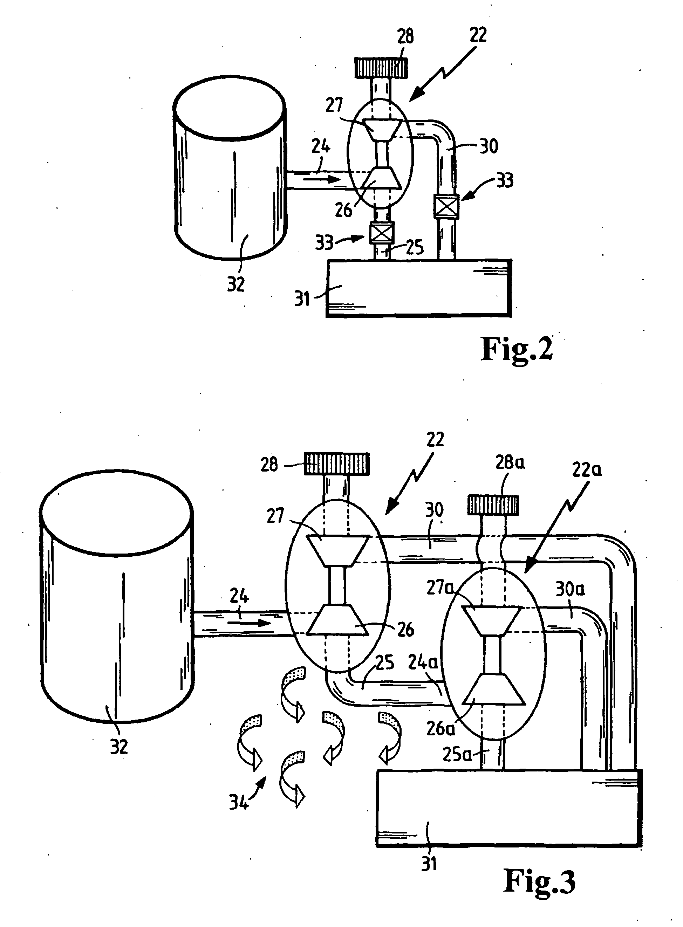

Ein solches Sekundärlufteinblassystem ist zum Beispiel aus der WO37/38212 bekannt. Der grundsätzliche Aufbau lässt sich der Figur 2 entnehmen. Die Sekundärluft wird durch eine Leitung 13 dem Ansaugtrakt der Brennkraftmaschine auf der Reinseite vor einer Drosselklappe 33 entnommen und durch einen Verdichter 26 über eine Leitung 14 in den Auspuffbereich 31 gepumpt. Zur Steuerung des Systems können verschiedene Ventile verwendet werden. Der Antrieb des Verdichters 26 kann entsprechend Figur 3 durch eine Turbine 35 erfolgen, die sich den Unterdruck der sich im Saugrohr durch die Drosselklappe 33 einstellt, zu Nutze macht. Der zum Antrieb der Turbine notwendige Druckunterschied im Saugrohr vor und nach der Drosselklappe entsteht allerdings nur in Betriebszuständen bei geschlossener oder nahezu geschlossener Drosselklappe. Die im Stand der Technik bekannte Anwendung liegt bei Benzinmotoren.

Die mit Ruß beladenen Partikel bei Dieselmotoren werden neuerdings über Dieselpartikelfilter gereinigt. Diese Dieselpartikelfilter beladen sich innerhalb von Stunden mit Ruß auf einen maximal zulässigen Gegendruck und müssen daraufhin regeneriert werden. Diese Regeneration erfolgt üblicherweise durch die Verbrennung des gespeicherten Rußes. Die notwendige Temperatur zum Abbrennen der Rußpartikel wird dabei bevorzugt über zusätzliche Systemhilfen bereitgestellt. Generell wird hierbei zwischen kontinuierlich (passiv) und diskontinuierlich (aktiv) arbeitenden Systemen sowie entsprechenden Kombinationen aus beiden Typen unterschieden. Dieselpartikelfilter mit Brennerregeneration oder mit thermoelektrischer Regeneration gehören zu den aktiven Systemen. Die Regenerationssysteme mit Kraftstoffbrenner benötigen neben der Kraftstoffzufuhr ausreichend Verbrennungsluft. Die Systeme mit thermoelektrischer Regeneration benötigen ebenfalls Verbrennungsluft zur vollständigen Abbrennung der Rußpartikel.

Aufgabe der Erfindung ist es daher, eine Brennkraftmaschine und ein Verfahren zum Betrieb dieser Brennkraftmaschine zu schaffen, welches einen Betrieb des Sekundärlufteinblassystems auch für Dieselmotoren gewährleistet. Eine weitere Aufgabe besteht darin, hierdurch einen Frischgasstrom zur Nutzung zur Regeneration bei Dieselpartikelfiltern zu erzeugen. Diese Aufgabe wird durch die Merkmale der Ansprüche 1 und 10 gelöst.

### Offenbarung der Erfindung

Die zur Ausführung des erfindungsgemäßen Verfahrens notwendige Dieselbrennkraftmaschine weist einen Ansaugtrakt mit einem Luftansaugfilter auf, wobei die durch den Luftansaugfilter gereinigte Luft durch den Ansaugtrakt der Brennkraftmaschine zugeleitet wird. Weiterhin weist die Dieselbrennkraftmaschine eine Druckluftquelle, einen Dieselpartikelfilter, welcher im Abgastrakt angeordnet ist, und ein Leitungssystem für Sekundärluft auf. Dieses beinhaltet eine Entnahmeleitung für Sekundärluft aus dem Ansaugtrakt oder der Umgebung, wobei die Sekundärluft über einen Sekundärluftverdichter in den Abgastrakt der Brennkraftmaschine geleitet wird. Falls die Sekundärluft aus der Umgebung entnommen wird, wird vorzugsweise ein Filterelement vorgeschaltet, so dass keine verunreinigte Luft in das Sekundärluftsystem eingesaugt wird. Erfindungsgemäß wird nun ein Überdruck der Druckluftquelle zum Antrieb einer Sekundärluftturbine des Sekundärluftsystems genutzt, wobei die Sekundärluftturbine den Sekundärluftverdichter antreibt. In vorteilhafter Art und Weise kann somit ein Sekundärluftsystem zur Frischluftanreicherung des Abgasnachbehandlungssystems verwendet werden, obwohl eine Dieselbrennkraftmaschine nicht die notwendige Druckdifferenz im Ansaugtrakt zum Antrieb der Sekundärluftturbine aufweist. Dadurch, dass bei modernen Dieselbrennkraftmaschinen aber immer eine Druckluftquelle in jedweder Form zur Verfügung steht, kann ein bestimmter Anteil der in der Druckluftquelle zur Verfügung stehenden unter Druck stehenden Luft zum Antrieb der Sekundärluftturbine verwendet werden.

Gemäß einer ersten Alternative der Erfindung, wird ein Ansaugluftverdichter mittels einer Turbine im Abgasstrom angetrieben. Dies entspricht einem klassischen Abgasturbolader wie er in vielen Brennkraftmaschinen eingesetzt wird. Ein Teil des Überdrucks in bestimmten Betriebsbereichen der Brennkraftmaschine kann dabei durch einen Überdruckabzweig entnommen und der Sekundärluftturbine zur Verfügung gestellt werden.

Gemäß einer hierzu alternativen Ausgestaltung wird der Ansaugluftverdichter mittels einer mechanischen Kopplung mit der Brennkraftmaschine angetrieben. Dieses entspricht einem klassischen Kompressor, welcher ebenfalls Standard in vielen Brennkraftmaschinen ist. Auch hier weist der Ansaugluftverdichter einen Abzweig zum Auslass des Überdrucks in bestimmten Betriebsbereichen der Brennkraftmaschine zur Sekundärluftturbine auf.

Eine weitere alternative Möglichkeit zum Antreiben des Ansaugluftverdichters besteht darin, diesen mittels elektrischer Energie, d. h. durch einen Elektromotor, anzutreiben. Hier ergibt sich weiterhin der Vorteil, dass der Ansaugluftverdichter unabhängig von der Drehzahl der Brennkraftmaschine angetrieben werden kann und somit das Drehmoment der Brennkraftmaschine über einen sehr breiten Bereich anheben kann. Zum Abfangen des Überdrucks weist auch dieser Ansaugluftverdichter einen Überdruckabzweig auf, wobei der Überdruck dann zum Antrieb des Sekundärluftsystems verwendet werden kann.

Gemäß einer zweiten Alternative der Erfindung ist die Druckluftquelle als Druckkessel ausgebildet und ein bestimmter Teil der gespeicherten Druckluft wird der Sekundärluftturbine zugeführt. Die Ausrüstung von bestimmten Kraftfahrzeugen mit Druckluftkesseln ist besonders im Nutzfahrzeugbereich üblich, da die dort notwendige Bremsenergie über Druckluftbremsanlagen aufgebracht wird, wobei hierzu immer ein Kompressor und wenigstens ein Druckluftkessel gehört. Da der Kompressor den Druck im Druckluftkessel immer zwischen einem vorgegebenen Minimal- und Maximalwert hält, kann hier bei entsprechender Auslegung der Kompressorleistung ein Teil der im Druckluftkessel gespeicherten Druckluft zum Antrieb der Sekundärluftturbine verwendet werden. Dabei wird die Turbine des Sekundärluftladers als Drossel verwendet, um einen Teil der freiwerdenden Energie zu nutzen, indem sie in kinetische Energie umgewandelt wird und den Verdichter antreiben kann.

Es ist vorteilhaft, wenn auch der Ausgang der Sekundärluftturbine mit dem Abgastrakt der Dieselbrennkraftmaschine verbunden ist, wobei weiterhin ein Regelsystem vorhanden ist, welches die Sekundärluftzuführung über den Sekundärluftverdichterausgang oder über den Sekundärluftturbinenausgang oder über beide Ausgänge gleichzeitig regelt. Dadurch lassen sich einerseits Luftmengenverluste durch ein Ablassen eines der Luftströme durch einen der beiden Ausgänge vermeiden sowie ein großes verfügbares Luftvolumen zur Frischluftanreicherung im Abgasnachbehandlungssystem erzielen.

Zur Erzielung eines besseren Wirkungsgrades ist es vorteilhaft, ein zweites Sekundärluftsystem vorzusehen, wobei der Ausgang der ersten Sekundärluftturbine mit dem Eingang der zweiten Sekundärluftturbine verbunden ist und der Ausgang des ersten Sekundärluftverdichters mit dem Abgasnachbehandlungssystem verbunden ist. Die aus dem zweiten Sekundärluftverdichter und aus der zweiten Sekundärluftturbine austretende Frischluft wird anschließend ebenfalls dem Abgastrakt der Dieselbrennkraftmaschine zugeführt. Der Sekundärluftverdichter des zweiten Sekundärluftsystems ist dabei bevorzugt über einen Filter mit der Umgebung verbunden. Weiterhin lässt sich der enorme Temperaturabfall an den Turbinenseiten beider Stufen beispielsweise bei der Abgasrückführungskühlung, besonders bei Kunststoffrohren, oder für andere Aggregate nutzen. Auf diese Art und Weise wird die Energie optimal umgesetzt und der Wirkungsgrad des Gesamtsystems maximiert.

Die Dieselbrennkraftmaschine zur Ausführung des erfindungsgemäßen Verfahrens weist einen Motorblock mit einem Zylinderkopf und einem Kurbelgehäuse, ein Ansaugsystem für die Verbrennungsluft mit einem Ansaugfilter, eine Druckluftquelle und eine Abgasanlage mit einem Leitungssystem für Sekundärluft auf. Dieses Leitungssystem für Sekundärluft weist weiterhin eine Entnahmeleitung für Sekundärluft aus dem Ansaugtrakt oder der Umgebung auf, welche mit einem Sekundärluftverdichter für die Sekundärluft und von diesem ausgehend eine Zuführleitung für die Sekundärluft in die Abgasanlage aufweist. Zusätzlich ist ein Leitungssystem mit einer darin angeordneten Sekundärluftturbine zum Antrieb des Sekundärluftverdichters vorhanden, wobei die Turbine mit dem Sekundärluftverdichter mechanisch gekoppelt ist und wobei die Überdruckquelle über eine weitere Leitung mit dem Eingang der Sekundärluftturbine gekoppelt ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

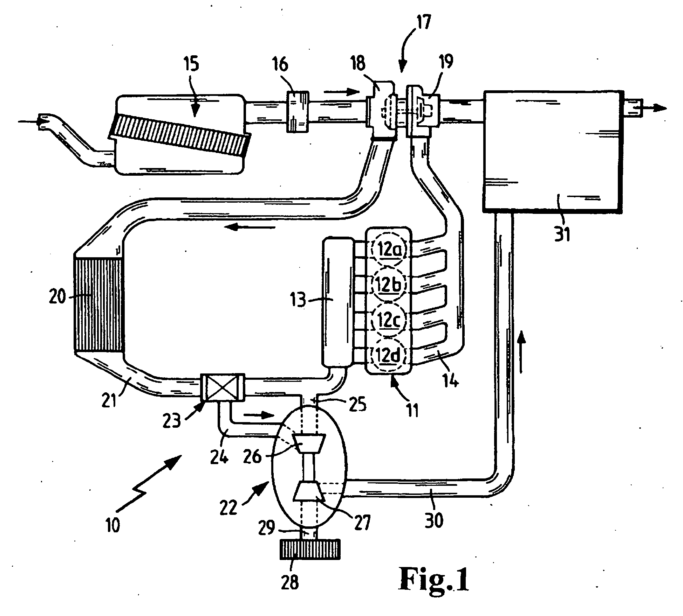

Die Figuren 1 bis 3 zeigen verschiedene Varianten von Dieselbrennkraftmaschinen mit einer Frischluftzufuhr in das Abgasnachbehandlungssystem über Sekundärluftlader.

### Ausführungsform(en) der Erfindung

Die Figur 1 zeigt eine Dieselbrennkraftmaschine 10 mit einem dazugehörigen Motor 11, wobei der Motor vier Zylinder 12a bis 12d aufweist. Zu diesen vier Zylindern führt ein Ansaugkrümmer 13, wohingegen die Abgase über einen Abgaskrümmer 14 abgeführt werden. Frischluft wird über einen Luftfilter 15 gefiltert, durch einen Luftmassenmesser 16 zur Bestimmung des Massenvolumenstromes geleitet und zu einem Ansaugluftverdichter 18 eines Abgasturboladers 17 geführt. Der Ansaugluftverdichter 18 ist mit einer Abgasturbine 19 gekoppelt, so dass ein Durchleiten von Verbrennungsabgasen aus dem Abgaskrümmer 14 heraus durch die Abgasturbine 19 zu einer Verdichtung der Ansaugluft in dem Ansaugluftverdichter 18 führt. Die verdichtete Ansaugluft wird daraufhin folgend über einen Ladeluftkühler 20 mittels einer Ansaugleitung 21 zum Ansaugkrümmer 13 geführt. Von der Ansaugleitung 21 abzweigend ist ein Sekundärluftsystem 22 angeordnet. Dieses zweigt an einer Regelstelle mit Ventil 23 von der Ansaugleitung 21 ab. Am Regelventil 23 schließt sich eine Sekundärluftturbinenzuleitung 24 an, welche eine Sekundärluftturbine 26 antreibt. Im Anschluss an die Sekundärluftturbine 26 wird der abgezweigte Luftstrom über eine Sekundärluftturbinenableitung 25 wieder in die Ansaugleitung 21 zurückgeführt. Die Sekundärluftturbine 26 ist wiederum mit einem Sekundärluftverdichter 27 mechanisch verbunden, wobei der Sekundärluftverdichter über eine Sekundärluftverdichterzuleitung 29 Luft über einen Luftfilter 28 ansaugt. Der Luftfilter 28 kann dabei ein separater Ansaugluftfilter sein, es ist jedoch auch möglich, die Luft aus dem Luftfilter 15 gefiltert zu entnehmen. Die über die Sekundärluftverdichterzuleitung 29 dem Sekundärluftverdichter 27 zugeführte Luft wird durch den Sekundärluftverdichter 27 verdichtet und über eine Sekundärluftverdichterableitung 30 einem Abgasnachbehandlungssystem 31 im Abgasstrang zugeführt. Das Abgasnachbehandlungssystem 31 kann hier beispielsweise ein Dieselpartikelfilter (DPF) sein.

Die Figur 2 zeigt eine alternative Möglichkeit der Versorgung des Sekundärluftladers 22 mit Antriebsluft für die Sekundärluftturbine 26. Der vorherigen Figur entsprechende Bauteile sind mit den gleichen Bezugszeichen versehen. In diesem Fall wird die Luft zum Antrieb des Sekundärluftladers 22 einem Druckkessel 32 entnommen. Derartige Druckkessel werden bevorzugt bei Nutzfahrzeugen mit einer Druckluftbremsanlage verwendet, da diese ebenfalls die Druckluft zum Betrieb der Bremsanlage speichern. Die Druckluft kann dabei über eine hier nicht dargestellte Regelung entsprechend der Vorgabe beispielsweise eines Steuergerätes gezielt in bestimmten vorgegebenen Mengen entnommen werden und über eine Sekundärluftturbinenzuleitung 24 der Sekundärluftturbine 26 zugeführt werden. In diesem Fall sind weiterhin die Sekundärluftturbinenableitung 25 und die Sekundärluftverdichterableitung 30 mit dem Abgasnachbehandlungssystem 31 verbunden. Über einen hier nicht dargestellten Regelmechanismus, z. B. über Ventile 33, können die einzelnen Leitungen 25, 30 einzeln geöffnet oder geschlossen werden, in Abhängigkeit des Frischluftbedarfes des Abgasnachbehandlungssystems.

Die Figur 3 zeigt eine alternative Ausgestaltung des Systems gemäß Figur 2. Den vorherigen Figuren entsprechende Bauteile sind mit den gleichen Bezugszeichen versehen. Zur Erzielung eines besseren Wirkungsgrades ist das System der Figur 2 in diesem Fall mehrstufig dargestellt. Im Anschluss an das erste Sekundärluftsystem 22 ist ein weiteres Sekundärluftsystem 22a angeschlossen. Der Sekundärluftturbinenausgang 25 ist mit dem Sekundärluftturbineneingang 24 des Sekundärluftsystems 22a und der Sekundärluftverdichterausgang 30 ist mit dem Abgasnachbehandlungssystem 31 verbunden. Die jeweiligen Ausgänge des Sekundärluftsystems 22a, nämlich der Sekundärluftturbinenausgang 25 und der Sekundärluftverdichterausgang 30 des Sekundärluftsystems 22a sind wiederum mit dem Abgasnachbehandlungssystem 31 verbunden. Dabei ist der Sekundärluftverdichter 27 des zweiten Sekundärluftsystems 22a mit der Umgebung über einen Luftfilter 28 verbunden. Auch hier besteht selbstverständlich die Möglichkeit, einen Regelmechanismus 33 entsprechend Figur 2 einzufügen. Die durch die Entspannung der Druckluft aus dem Druckluftkessel 32 entstehende Temperaturabsenkung auf den jeweiligen Turbinenseiten der Sekundärluftsysteme 22, 22a lässt sich über ein hier nicht näher dargestelltes Nutzungsmittel 34 beispielsweise zur Abgasrückführungskühlung oder auch als zusätzliche Ladeluftkühlung 34 nutzen.

## Patentansprüche

1. Verfahren zum Betrieb einer Dieselbrennkraftmaschine, aufweisend:
- einen Ansaugtrakt, welcher einen Luftansaugfilter aufweist, wobei die durch den Luftansaugfilter gereinigte Luft durch den Ansaugtrakt der Brennkraftmaschine zugeleitet wird,
- eine Druckluftquelle und
- einen Dieselpartikelfilter, welcher im Abgastrakt angeordnet ist, wobei die Dieselbrennkraftmaschine weiterhin
- ein Leitungssystem für Sekundärluft **aufweist,** welches eine Entnahmeleitung für Sekundärluft aus dem Ansaugtrakt oder der Umgebung aufweist, wobei die Sekundärluft über einen Sekundärluftverdichter in den Abgastrakt der Brennkraftmaschine geleitet wird,
wobei ein Überdruck der Druckluftquelle zum Antrieb einer Sekundärluftturbine des Sekundärluftsystems genutzt wird und die Sekundärluftturbine den Sekundärluftverdichter antreibt,
wobei die Druckluftquelle ein Ansaugluftverdichter oder ein Druckluftkessel ist.

2. Verfahren nach Anspruch 1, **dadurch gekennzeichnet, dass** die Druckluftquelle ein Ansaugluftverdichter ist und ein bestimmter Teil der verdichteten Ansaugluft der Sekundärluftturbine zugeführt wird.

3. Verfahren nach Anspruch 2, **dadurch gekennzeichnet, dass** der Ansaugluftverdichter mittels einer Turbine im Abgasstrom angetrieben wird.

4. Verfahren nach Anspruch 2, **dadurch gekennzeichnet, dass** der Ansaugluftverdichter mittels einer mechanischen Kopplung mit der Brennkraftmaschine angetrieben wird.

5. Verfahren nach Anspruch 2, **dadurch gekennzeichnet, dass** der Ansaugluftverdichter mittels elektrischer Energie angetrieben wird.

6. Verfahren nach Anspruch 1, **dadurch gekennzeichnet, dass** die Druckluftquelle ein Druckkessel ist und ein bestimmter Teil der gespeicherten Druckluft der Sekundärluftturbine zugeführt wird.

7. Verfahren nach Anspruch 6, **dadurch gekennzeichnet, dass** auch der Ausgang der Sekundärluftturbine mit dem Abgastrakt der Dieselbrennkraftmaschine verbunden ist und ein Regelsystem vorhanden ist, welches die Sekundärluftzuführung über den Sekundärluftverdichterausgang oder über den Sekundärluftturbinenausgang oder über beide Ausgänge regelt.

8. Verfahren nach Anspruch 6, **dadurch gekennzeichnet, dass** ein zweites Sekundärluftsystem vorgesehen ist, wobei der bestimmte Teil der Druckluft der Sekundärluftturbine des ersten Sekundärluftsystems zugeführt wird und der Ausgang des Sekundärluftverdichters des ersten Sekundärluftsystems mit dem Abgastrakt der Brennkraftmaschine verbunden ist und der Eingang des Sekundärluftverdichters des zweiten Sekundärluftsystems mit der Umgebung verbunden ist, wobei der Ausgang der ersten Sekundärluftturbine mit dem Eingang der zweiten Sekundärluftturbine verbunden ist und die Luft anschließend an die Ausgänge der zweiten Sekundärluftturbine und des zweiten Sekundärluftverdichters dem Abgastrakt zugeführt wird.

9. Dieselbrennkraftmaschine, welche
- einen Motorblock mit einem Zylinderkopf und einem Kurbelgehäuse,
- ein Ansaugsystem für die Verbrennungsluft mit einem Ansaugluftfilter,
- eine Druckquelle,
- eine Abgasanlage aufweist, mit einem Leitungssystem für Sekundärluft, welches
- eine Entnahmeleitung für Sekundärluft aus dem Ansaugtrakt oder der Umgebung hin zu
- einem Sekundärluftverdichter für die Sekundärluft und von diesem ausgehend
- wenigstens eine Zuführleitung für die Sekundärluft in die Abgasanlage aufweist,
- sowie ein Leitungssystem mit einer darin angeordneten Sekundärluftturbine aufweist, wobei die Turbine mit dem Sekundärluftverdichter mechanisch gekoppelt ist, wobei die Überdruckquelle über eine weitere Leitung mit dem Eingang der Sekundärluftturbine gekoppelt ist, wobei die Druckluftquelle ein Ansaugluftverdichter oder ein Druckluftkessel ist.

## Claims

1. Method for the operation of a diesel internal combustion engine, featuring:
- an intake tract which features an air intake filter, the air cleaned by the air intake filter being supplied through the intake tract to the internal combustion engine,
- a pneumatic source and
- a diesel particulate filter which is located in the exhaust gas tract, the diesel internal combustion engine featuring furthermore
- a duct system for secondary air which features an extraction line for secondary air from the intake tract or from the environment, the secondary air being supplied into the exhaust gas tract of the internal combustion engine via a secondary air compressor,
the overpressure of the pneumatic source being used for driving a secondary air turbine of the secondary air system and the secondary air turbine driving the secondary air compressor,
the pneumatic source being an intake air compressor or a pressure vessel.

2. Method according to claim 1, **characterized in that** the pneumatic source is an intake air compressor and that a certain amount of the compressed intake air is supplied to the secondary air turbine.

3. Method according to claim 2, **characterized in that** the intake air compressor is driven by means of a turbine in the exhaust gas flow.

4. Method according to claim 2, **characterized in that** the intake air compressor is driven by means of a mechanical coupling with the internal combustion engine.

5. Method according to claim 2, **characterized in that** the intake air compressor is driven by means of electric energy.

6. Method according to claim 1, **characterized in that** the pneumatic source is a pressure vessel and that a certain amount of the stored compressed air is supplied to the secondary air turbine.

7. Method according to claim 6, **characterized in that** also the outlet of the secondary air turbine is connected with the exhaust gas tract of the diesel internal combustion engine and that a control system is provided which controls the secondary air supply via the secondary air compressor outlet or via the secondary air turbine outlet or via both outlets.

8. Method according to claim 6, **characterized in that** a second secondary air system is provided, with the certain amount of the compressed air being supplied to the secondary air turbine of the first secondary air system and the outlet of the secondary air compressor of the first secondary air system being connected with the exhaust gas tract of the internal combustion engine and the intake of the secondary air compressor of the second secondary air system being connected with the environment, with the outlet of the first secondary air turbine being connected with the intake of the second secondary air turbine and the air being then supplied to the outlets of the second secondary air turbine and the second secondary air compressor and then to the exhaust gas tract.

9. Diesel internal combustion engine which features
- an engine block with a cylinder head and a crankcase,
- an intake manifold system for the combustion air with an intake air cleaner,
- a pneumatic source,
- an exhaust gas device with a pipe system for the secondary air which features
- an extraction line for secondary air from the intake tract or the environment to
- a secondary air compressor for the secondary air and starting from this compressor
- at least one supply line for the secondary air into the exhaust gas device,
- as well as a pipe system with a secondary air turbine located therein, the turbine being mechanically coupled with the secondary air compressor, the overpressure source being coupled via another line with the intake of the secondary air turbine, and the pneumatic source being an intake air compressor or a pressure vessel.

## Revendications

1. Procédé de fonctionnement d'un moteur diesel à combustion interne, présentant :
- un système d'admission présentant un filtre d'aspiration d'air, l'air épuré par le filtre d'aspiration d'air étant amené par l'intermédiaire du système d'admission du moteur à combustion interne,
- une source d'air comprimé et
- un filtre à particules diesel disposé dans le système d'échappement le moteur diesel à combustion interne présentant par ailleurs
- un système de conduites pour air secondaire présentant une conduite de prise pour l'air secondaire issu du système d'admission ou de l'environnement, l'air secondaire étant acheminé par un compresseur d'air secondaire dans le système d'échappement du moteur à combustion interne,
une surpression de la source d'air comprimé étant utilisée pour entraîner une turbine d'air secondaire du système d'air secondaire et la turbine d'air secondaire entraînant le compresseur d'air secondaire,
la source d'air comprimé étant un compresseur d'air aspiré ou un réservoir d'air comprimé.

2. Procédé selon la revendication 1, **caractérisé en ce que** la source d'air comprimé est un compresseur d'air d'admission et qu'une certaine partie de l'air d'admission comprimé est acheminée à la turbine d'air secondaire.

3. Procédé selon la revendication 2, **caractérisé en ce que** le compresseur d'air d'admission est entraîné au moyen d'une turbine dans le flux des gaz d'échappement.

4. Procédé selon la revendication 2, **caractérisé en ce que** le compresseur d'air d'admission est entraîné au moyen d'un raccord mécanique avec le moteur à combustion interne.

5. Procédé selon la revendication 2, **caractérisé en ce que** le compresseur d'air d'admission est entraîné au moyen d'énergie électrique.

6. Procédé selon la revendication 1, **caractérisé en ce que** la source d'air comprimé est un réservoir de pression et qu'une certaine partie de l'air comprimé accumulé est acheminée à la turbine d'air secondaire.

7. Procédé selon la revendication 6, **caractérisé en ce qu'**également la sortie de la turbine d'air secondaire est reliée au système d'échappement du moteur diesel à combustion interne et qu'il existe un système de régulation qui régule la prise d'air secondaire par l'intermédiaire de la sortie du compresseur d'air secondaire ou de la sortie de la turbine d'air secondaire ou encore des deux sorties.

8. Procédé selon la revendication 6, **caractérisé en ce qu'**un deuxième système d'air secondaire est prévu, la certaine partie d'air comprimé étant acheminée à la turbine d'air secondaire du premier système d'air secondaire et la sortie du compresseur d'air secondaire du premier système d'air secondaire étant reliée au système d'échappement du moteur à combustion interne et l'entrée du compresseur d'air secondaire du deuxième système d'air secondaire étant reliée à l'environnement, la sortie de la première turbine d'air secondaire étant reliée avec l'entrée de la deuxième turbine d'air secondaire et l'air étant par la suite acheminé aux sorties de la deuxième turbine d'air secondaire et du deuxième compresseur d'air secondaire puis au système d'échappement.

9. Moteur diesel à combustion interne présentant
- un bloc moteur avec une culasse de cylindre et un carter de vilebrequin,
- un système d'aspiration pour l'air de combustion avec un filtre à air d'admission,
- une source de pression,
- une installation des gaz d'échappement, avec un système de conduites pour l'air aspiré qui présente
- une conduite de prise pour l'air secondaire issu du système d'admission ou de l'environnement menant à
- un compresseur d'air secondaire pour l'air secondaire et, en partant de ce compresseur,
- au moins une conduite d'alimentation pour l'air secondaire vers l'installation des gaz d'échappement,
- ainsi qu'un système de conduites avec une turbine d'air secondaire disposée à l'intérieur, la turbine étant raccordée mécaniquement au compresseur d'air secondaire, la source de surpression étant raccordée par une autre conduite à l'entrée de la turbine d'air secondaire, la source d'air comprimé étant un compresseur d'air d'admission ou un réservoir de pression.
